# EUROPÄISCHE PATENTSCHRIFT

(11) **EP 3 353 956 B1**
(45) Veröffentlichungstag und Bekanntmachung des Hinweises auf die Patenterteilung: **30.07.2025**
(21) Anmeldenummer: 16774622.1
(22) Anmeldetag: 22.09.2016
(51) Int. Cl.: H04L 43/028, G05B 19/418, H04L 9/40

(54) **VERFAHREN UND VORRICHTUNG ZUR ÜBERWACHUNG VON STEUERUNGSSYSTEMEN**
METHOD AND DEVICE FOR MONITORING CONTROL SYSTEMS
PROCÉDÉ ET DISPOSITIF DE SURVEILLANCE DE SYSTÈMES DE COMMANDE

(30) Priorität: 22.09.2015 DE 102015012064; 22.09.2015 DE 102015012065
(43) Veröffentlichungstag der Anmeldung: 01.08.2018
(73) Patentinhaber: Rhebo GmbH, 04179 Leipzig (DE)
(72) Erfinder: MENSCHNER, Martin, 04179 Leipzig (DE)
(74) Vertreter: Hecht, Jan-David
(86) Internationale Anmeldenummer: PCT/EP2016/001584
(87) Internationale Veröffentlichungsnummer: WO 2017/050431

(56) Entgegenhaltungen:
- DE-A1- 102010 033 229
- US-B1- 7 644 150
- MATTI MANTERE ET AL: "Network Traffic Features for Anomaly Detection in Specific Industrial Control System Network", FUTURE INTERNET, vol. 5, no. 4, 25 December 2013 (2013-12-25), pages 460 - 473, XP055317286, ISSN: 1999-5903, DOI: 10.3390/fi5040460

## Beschreibung

Die vorliegende Erfindung betrifft ein Verfahren zur Überwachung von Steuerungssystemen nach dem Oberbegriff von Anspruch 1 und eine Vorrichtung zur Überwachung von Steuerungssystemen nach dem Oberbegriff von Anspruch 10.

Solche Steuerungssysteme werden vor allem in der industriellen Fertigung und Logistik eingesetzt und hier liegt auch das Hauptanwendungsfeld der vorliegenden Erfindung.

Mit Hilfe solcher Steuerungssysteme werden die Fertigungsabläufe und Lagerungs- und Transportabläufe gesteuert und überwacht. Bisher wurde dabei beispielsweise Überwacht, ob eine bestimmte, in das Steuerungssystem eingebundene Vorrichtung ihren Betrieb ordnungsgemäß vollzieht oder ob Fehler auftreten, wobei dazu Parameter der Vorrichtung abgefragt und überwacht wurden.

In der heutigen Zeit sind moderne Steuerungssysteme beispielsweise auf Ethernet basiert und die Kommunikation in dem Steuerungssystem erfolgt beispielsweise über IP (Internet Protokoll). Dies ist zwar sehr einfach handhabbar, allerdings besteht auch eine deutliche Anfälligkeit nicht nur gegenüber externen Angriffen, sondern auch gegenüber internen Datenverlusten während der Kommunikation. Solche Fehler in dem Steuerungssystem konnten bisher nicht zufriedenstellend erkannt werden. Die Deutsche Patentanmeldung DE 10 2010 033229 A1 offenbart ein Verfahren und System zur manipulationssicheren Übertragung von Steuerdaten zwischen Steuereinheiten eines Netzwerkes.

Der wissenschaftliche Artikel Veröffentlichung "Network Traffic Features for Anomaly Detection in Specific Industrial Control System Network", von MATTI MANTERE ET AL: mit den Veröffentlichungsnummern XP055317286, ISSN: 1999-5903, DOI: 10.3390/fi5040460, offenbart eine Analyse von Verkehrsmerkmalen aus der Perspektive der Eignung zur Identifikation von abnormen Verkehrsflüssen in einem Kommunikationsnetzwerk zur Anwendung in einem industriellen Steuerungsumfeld.

Das US-Patent US 7 644 150 B1 offenbart ein selbstlernendes System zur Verwaltung eines Peer-To-Peer-Netzwerkes, mit einem Server zum Extrahieren einer Signatur in einem Verkehrsfluss, auf der Anwendungsschicht, basierend auf Schicht-3/Schicht-4-Information des beobachteten Verkehrsflusses und auf einer zeitlichen Korrelationsmetrik des Verkehrsflusses.

Die Aufgabe der vorliegenden Erfindung besteht daher darin eine Überwachung von Steuerungssystemen, insbesondere industriellen Steuerungssystemen zu ermöglichen, die Fehler im Rahmen der Kommunikation erkennt, insbesondere die oben genannten Fehler sicher erkennt.

Diese Aufgabe wird gelöst mit dem erfindungsgemäßen Verfahren nach Anspruch 1, der erfindungsgemäßen Vorrichtung nach Anspruch 10 und dem erfindungsgemäßen Computerprogrammprodukt nach Anspruch 14.

Vorteilhafte Weiterbildungen sind in der nachfolgenden Beschreibung und den abhängigen Unteransprüchen angegeben.

Die Erfinder haben erkannt, dass die Aufgabe der vorliegenden Erfindung in überraschender Weise besonders einfach dadurch gelöst werden kann, dass die Kommunikation maschinell erlernt und dann auftretende neue Kommunikation potentiell als Fehler bewertet wird und dies durch eine entsprechende Meldung erfolgt. Diese Lösung basiert auf der Annahme, dass in Steuerungssystemen die Kommunikation immer determiniert abläuft und nur bei Fehlern bzw. Störungen diese Determinierung unterbrochen wird. Tatsächlich erfolgt beispielsweise in einem industriellen Steuerungssystem einer Fertigungsstraße die interne Kommunikation in stets wiederkehrenden Bahnen, wobei sich ggf. einzelne Parameter beispielsweise hinsichtlich Stückzahlen etc. verändern können, die beispielsweise miteinander kommunizierenden Vorrichtung und die Art ihrer Kommunikation sich aber nicht verändert, so dass neue Kommunikation erst einmal potentiell fehlerbehaftet ist. Beispielsweise basieren industrielle Steuerungssysteme auf dem Standard Ethernet. Dabei kann es allerdings teilweise zu einem Datenstau oder auch Datenverlust kommen, was mit der vorliegenden Erfindung erkannt werden würde.

Das erfindungsgemäße Verfahren zur Überwachung von Steuerungssystemen, insbesondere industriellen Steuerungssystemen, wobei das Steuerungssystem zumindest ein Kommunikationsnetzwerk und zumindest zwei mit dem Kommunikationsnetzwerk verbundene Kommunikationsendpunkte aufweist, die über das Kommunikationsnetzwerk Daten austauschen, zeichnet sich daher dadurch aus, dass die zwischen den Kommunikationsendpunkten ausgetauschten Daten erfasst und nach Vergleich der aktuell erfassten Daten mit zuvor erfassten Daten bei Erfassung neuer Daten eine Meldung erzeugt wird.

"Kommunikationsnetzwerke" im Sinne der vorliegenden Erfindung können sowohl kabelgebundene als auch nicht kabelgebundene Netze sein, über die Daten kommuniziert werden. Beispielsweise kann es sich um ein Ethernet basiertes Kommunikationsnetz handeln.

"Kommunikationsendpunkt" im Sinne der vorliegenden Erfindung sind Punkte im Kommunikationsnetzwerk, an denen Daten erzeugt, verarbeitet, empfangen und weitergeleitet werden. Dabei kann sich beispielsweise um Vorrichtungen handeln. Solche Kommunikationsendpunkte weisen üblicherweise eine Gerätenummer (Hardware-Adresse, MAC-Adresse) und eine Anwendungsprotokoll-Adresse (IP-Adresse) auf. Einfache Leitungen sind daher keine Kommunikationsendpunkte, dagegen Vorrichtungen, wie Fertigungsmaschinen, Netzwerkschnittstellen, Server und dgl.

"Anwendungsprotokolle" betreffen nicht Basisprotokolle der Kommunikation, wie Ethernet, Internet Protocol (IP) oder Transmission Control Protocol (TCP), sondern es handelt sich um sogenannte Schicht-7-Protokolle nach dem OSI-Modell der Datenkommunikation. Anwendungsprotokolle sind beispielsweise "Profinet" der Firma Siemens, "Modbus" oder "Ethercat".

An einer "Kommunikation" beteiligt sind zumindest zwei "Kommunikationsendpunkte", allerdings können auch mehr als zwei "Kommunikationsendpunkte" an einer Kommunikation beteiligt sein. Wenn zwei Kommunikationsendpunkte beteiligt sind, dann handelt es sich um eine 1-1-Kommunikation ("Unicast"), wenn ein Kommunikationsendpunkt mit einer Auswahl Kommunikationsendpunkten kommuniziert, dann handelt es sich um eine 1-n(m)-Kommunikation ("Multicast") und ein Kommunikationsendpunkt mit allen anderen Kommunikationsendpunkten kommuniziert, dann handelt es sich um eine 1-n(n)-Kommunikation ("Broadcast").

"Daten" im Sinne der vorliegenden Erfindung sind alle Arten von Datenverbindungen bzw. Paketen von Datenverbindungen im Rahmen der Kommunikation in dem Steuerungssystem. "Meldungen" im Sinne der vorliegenden Erfindung sind nicht nur zeichenbasierte Mitteilungen, sondern auch optische und/oder akustische Signale sowie Steuerungssignale zur Aktivierung bestimmter maschineller Vorgänge.

Die Überwachung besteht außerhalb des bestehenden Kommunikationsnetzwerks, d.h. dass die Datenerfassung nicht in dem Kommunikationsnetzwerk selbst erfolgt, sondern außerhalb davon. Es besteht zwar eine Verbindung zum Kommunikationsnetzwerk, um die Daten abzufassen, aber die Erfassung, also Speicherung, Auswertung und dgl. der Daten erfolgt unabhängig von dem bestehenden Kommunikationsnetzwerk. "Außerhalb" in dieser Erfindung bedeutet also, dass es sich dabei um Mittel handelt, ohne deren Anwesenheit das Kommunikationsnetzwerk dennoch voll funktionsfähig zum Betrieb des Steuerungssystems ist.

Es ist vorgesehen, dass die Daten passiv abgefasst werden. Es erfolgt also keine aktive Datenabfassung und -weiterleitung bzw. -bearbeitung, wie es beispielsweise bei einem Proxyserver der Fall wäre. Dadurch bleibt das Steuerungssystem sehr störungsunanfällig.

Die ausgetauschten Daten auf darin enthaltene Kommunikationsparameter analysiert, wobei die Kommunikationsparameter zumindest einen Parameter aus der Gruppe:
- Hardware-Adresse des an der Kommunikation beteiligten Kommunikationsendpunktes,
- IP-Adresse des an der Kommunikation beteiligten Kommunikationsendpunktes,
- Anwendungsprotokoll, mit dem die Daten ausgetauscht werden und
- Nachricht, die mit den ausgetauschten Daten kommuniziert wird,
umfassen. Dadurch kann eine genauere Spezifizierung der Kommunikation daraufhin erfolgen, ob die kommunizierten neuen Daten eine Fehlerrelevanz aufweisen, oder ob es sich nur um beispielsweise gerätespezifische geänderte Parameter handelt, die die Funktionsweise des gesamten Steuerungssystems nicht betreffen. Dabei ist bevorzugt vorgesehen, dass das Anwendungsprotokoll aus der Gruppe: Profinet, Modbus, Ethercat oder gerätespezifischen Protokollen der Kommunikationsendpunkte gewählt ist. Die IP-Adresse kann natürlich nur dann analysiert werden, wenn es sich tatsächlich um einen IP-Datenverkehr handelt. Es müssen also nicht immer all diese Kommunikationsparameter für jeden Datenverkehr vorliegen, können es aber.

Es ist weiterhin vorgesehen, dass aus den analysierten Kommunikationsparametern Kombinationen zur Definierung von Datentypen gebildet werden. Dabei sind die Datentypen bevorzugt zumindest eine Kombination von Kommunikationsparametern aus der Gruppe:
- Hardware-Adresse des an der Kommunikation beteiligten Kommunikationsendpunktes,
- IP-Adresse des an der Kommunikation beteiligten Kommunikationsendpunktes,
- Anwendungsprotokoll, mit dem die Daten ausgetauscht werden,
- Hardware-Adresse des an der Kommunikation beteiligten Kommunikationsendpunktes kombiniert mit dem Anwendungsprotokoll, mit dem die Daten ausgetauscht werden,
- IP-Adresse des an der Kommunikation beteiligten Kommunikationsendpunktes kombiniert mit dem Anwendungsprotokoll, mit dem die Daten ausgetauscht werden,
- Kombination der Hardware-Adressen der an der Kommunikation beteiligten Kommunikationsendpunkte,
- Kombination der IP-Adressen der an der Kommunikation beteiligten Kommunikationsendpunkte,
- Kombination der Hardware-Adressen der an der Kommunikation beteiligten Kommunikationsendpunkte und des Anwendungsprotokolls, mit dem die Daten ausgetauscht werden,
- Kombination der IP-Adressen der an der Kommunikation beteiligten Kommunikationsendpunkte und des Anwendungsprotokolls, mit dem die Daten ausgetauscht werden,
- Kombination der Hardware-Adresse und der IP-Adresse des an der Kommunikation beteiligten Kommunikationsendpunktes,
- Kombination der Hardware-Adresse und der Nachricht des an der Kommunikation beteiligten Kommunikationsendpunktes,
- Kombination der !P-Adresse und der Nachricht des an der Kommunikation beteiligten Kommunikationsendpunktes,
- Kombination der Hardware-Adressen der an der Kommunikation beteiligten Kommunikationsendpunkte und der Nachricht und
- Kombination der IP-Adressen der an der Kommunikation beteiligten Kommunikationsendpunkte und der Nachricht
umfassen. Diese Datentypen zeigen relevante Störungen oder Fehler in dem Steuerungssystem besonders gut an und machen die Art des Fehlers oder der Störung sehr leicht erkennbar.

Die Meldung wird bei Erfassung eines solchen neuen Datentyps erzeugt**.**

Es wird dann also nicht unbedingt bei jeder Art neuer kommunizierter Daten eine Meldung erzeugt, sondern nur noch, wenn ein neuer Datentyp erkannt wird. "Neuer Datentyp" meint in diesem Zusammenhang nicht nur, dass im Rahmen der laufenden Überwachung eine bisher noch nicht dagewesene Art von Datentyp, also eine bisher noch nicht analysierte Kombination von Kommunikationsparametern ermittelt wird, sondern vor allem auch, dass der Inhalt des Datentyps neu ist, also zwar die enthaltene Art von Kommunikationsparametern bekannt war, aber der Inhalt der Kommunikationsparameter neu ist, es sich also um eine neue Ausprägung eines bekannten Datentyps handelt.

Da in einem Steuerungssystem nicht nur ein einheitliches Anwendungsprotokoll vorliegen muss, sondern beispielsweise in verschiedenen Bereichen des Steuerungssystems unterschiedliche Standard- oder proprietäre Anwendungsprotokolle bestehen können, ist es vorgesehen, dass zur Analyse des verwendeten Anwendungsprotokolls die ausgetauschten Daten auf die einem bekannten Anwendungsprotokoll zugehörigen Muster hin und/oder heuristisch untersucht werden. Dadurch kann das zur Kommunikation der neuen Daten verwendete Anwendungsprotokoll ermittelt werden, um die anderen Kommunikationsparameter zu bestimmen. Diese Protokollerkennung bedient sich mehrerer Merkmale einer Datenverbindung bzw. deren Pakete, um eine Aussage darüber zu treffen, welches Anwendungsprotokoll in der Kommunikation verwendet wird. Vor allem werden mittels Deep Packet Inspection die Nutzdaten der Pakete inspiziert, um durch Finden bestimmter Muster oder aber durch Anwendung von Heuristiken das zugrundeliegende Anwendungsprotokoll zu ermitteln. Mit Hilfe dieser Analyse können auch unbekannte Anwendungsprotokolle individualisiert erkannt werden.

In einer vorteilhaften Weiterbildung ist vorgesehen, dass zur Analyse der kommunizierten Nachricht die ausgetauschten Daten mithilfe des Anwendungsprotokolls dekodiert werden. Zur Dekodierung der Nachricht aus den Daten wird bevorzugt ein Protokolldekoder verwendet, wobei zu jedem Anwendungsprotokoll ein eigener Protokolldekoder gehört. Dabei wird bevorzugt als Kommunikationsparameter anstelle der Nachricht der Nachrichtentyp der Nachricht verwendet, der aus der Nachricht analysiert wird, wobei der Nachrichtentyp insbesondere einer aus der Gruppe: Fehlermeldung, Befehl zur Authentifizierung, Befehl zum Lesen von Daten, Befehl zum Schreiben von Daten und Befehl zur Zeitsynchronisation von zwei Kommunikationsendpunkten ist. Auch dadurch wird eine deutliche Vereinfachung der Überwachung erreicht, da nun nicht mehr der Inhalt der Nachricht ins Detail analysiert werden muss, sondern nur noch die Art der Nachricht zur Überwachung verwendet wird.

Falls kein geeigneter Protokolldekoder vorhanden ist, dann kann das Anwendungsprotokoll nicht bestimmt werden oder es wird ggf. ein entsprechender Dekoder in die Überwachung eingepflegt, wobei dieser Prozess per Hand oder automatisch ablaufen könnte.

Andererseits kann es auch vorgesehen sein, dass das Anwendungsprotokoll zwar erkannt werden kann, jedoch aus Komplexitätsgründen oder aufgrund mangelnder Nachfrage durch den Benutzer der Protokolldekoder nicht implementiert ist, so dass zwar das Anwendungsprotokoll erkannt werden kann, jedoch nicht die Nachricht bzw. der Nachrichtentyp auslesbar ist.

In einer vorteilhaften Weiterbildung ist vorgesehen, dass aus den neuen Daten oder dem neuen Datentyp mittels einer Streuwertfunktion ein Hashwert gebildet wird. Da solche Hashwerte einzigartig sind, kann die Überwachung wesentlich beschleunigt werden, da nicht mehr die Daten bzw. Datentypen im Rahmen der Überwachung verglichen werden müssen, sondern nur noch deren Hashwerte als Indizierung.

In einer vorteilhaften Weiterbildung ist vorgesehen, dass die neuen Daten, die neuen Datentypen und/oder die zugehörigen Hashwerte in einem Speicher, vorzugsweise mit einer indizierten Datenstruktur abgelegt werden, wobei die neuen Daten, die neuen Datentypen bzw. die zugehörigen Hashwerte bevorzugt chronologisch, insbesondere zusammen mit einem Zeitstempel abgelegt werden. Dadurch wird eine genau Zuordenbarkeit zum realen Verlauf der Vorgänge in dem Steuerungssystem erreicht.

In einer vorteilhaften Weiterbildung ist vorgesehen, dass zudem auch für die Daten Datentypen oder Hashwerte, die nicht als neu erkannt wurden, sondern schon vorher hinterlegt waren, der Zeitstempel erneuert wird, da sich dann ein genaues Abbild des Steuerungssystems zum Zeitpunkt der Meldung ergibt.

In einer vorteilhaften Weiterbildung ist vorgesehen, dass für jede Daten, jeden Datentyp oder jeden Hashwert die Zeitstempel für einen vorgegebenen Zeitraum abgespeichert werden, dann kann auch eine Überwachung auf ausbleibende Kommunikation erfolgen, um so Fehler und Störungen zu erkennen, die beispielsweise auf dem Ausfall einer Vorrichtung im Steuerungssystem beruhen. Dieser vorgegebene Zeitraum kann vorgegeben aber fest sein oder die Speicherung erfolgt so lange, bis ein autorisierter Benutzer, die Speicherung löscht, um beispielsweise nach einem Umbau und Neustart des Steuerungssystems der geänderten Kommunikation Rechnung zu tragen.

Außerdem kann vorgesehen sein, dass die neuen Daten, die neuen Datentypen bzw. die zugehörigen Hashwerte nach einer ersten festlegbaren Zeit wieder aus dem Speicher gelöscht werden, wobei diese erste festlegbare Zeit vorzugsweise höchstens 1 Jahr, bevorzugt höchstens 4 Wochen, insbesondere 1 bis 2 Wochen beträgt. Dadurch kann eine Aktualisierung der Überwachungsgrundlagen vorgenommen werden. Andererseits kann die Zeit auch nicht beschränkt sein, so dass keine solche Aktualisierung erfolgt.

In einer vorteilhaften Weiterbildung ist vorgesehen, dass die ausgetauschten Daten auf ausbleibende Kommunikation hin analysiert werden. Zum Beispiel gibt es zyklische Kommunikationsereignisse, bei denen in periodisch wiederkehrenden Abständen Daten aufgrund im Rahmen eines bestimmten Übertragungsprotokolls zur Sicherstellung der Protokollkonformität ausgetauscht werden. Nach ggf. einer Analyse der Periodizität von erfassten Daten kann überprüft werden, ob solche Daten ordnungsgemäß, ggf. im Rahmen einer gewissen zeitlichen Unschärfe, ausgetauscht werden, oder ob diese Kommunikation ausbleibt, was dann als Abweichung vom Normalfall eine Meldung erzeugt.

Selbständiger Schutz wird beansprucht für die erfindungsgemäße Vorrichtung zur Überwachung von Steuerungssystem nach Anspruch 10.

Der Sensor ist ein passives Element ist. D.h. dass der Sensor die Kommunikation nur passiv abfasst, nicht jedoch aktiv verarbeitet und auch nicht innerhalb des überwachten Kommunikationsnetzwerks weiterleitet, wie es beispielsweise ein Proxy-Server macht. Dadurch bleibt das Steuerungssystem sehr störungsunanfällig.

In einer vorteilhaften Weiterbildung ist vorgesehen, dass die Vorrichtung angepasst ist, das erfindungsgemäße Verfahren durchzuführen.

In einer vorteilhaften Weiterbildung ist vorgesehen, dass zumindest ein Sensor vorgesehen ist, der mit dem Kommunikationsnetzwerk verbunden ist und angepasst ist, die ausgetauschten Daten ohne Veränderung dieser ausgetauschten Daten zu erfassen. Ein solcher Sensor kann dabei als gegenständliches Gerät aber auch als Software, beispielsweise als Applikation oder auch als eine Mischform verwirklicht sein. Die Überwachung kann dann ganz oder zumindest teilweise in diesem Sensor oder auch ganz oder teilweise zentral, beispielsweise auf einem Server, erfolgen.

Diese "Sensoren" können eigene Einrichtungen sein oder einfach nur Punkte zum passiven Abfassen von Datenverkehr aus dem Kommunikationsnetzwerk. Beispielsweise können die Replizierungsports einer Netzwerk-tap solche "Sensoren" verkörpern.

In einer vorteilhaften Weiterbildung ist vorgesehen, dass der Sensor eingerichtet ist, mittels einer Streuwertfunktion Hashwerte zu berechnen, wobei der Sensor bevorzugt angepasst ist, die Hashwerte zu speichern, wobei der Speicher insbesondere eine indizierte Datenstruktur aufweist.

In einer vorteilhaften Weiterbildung ist vorgesehen, dass der Sensor eingerichtet ist, zumindest die neuen Daten einem Qualitätsmanagement zuzuführen, wobei die Vorrichtung angepasst ist, die neuen Daten auf darin enthaltene Kommunikationsparameter zu analysieren, wobei die Kommunikationsparameter bevorzugt zumindest einen Parameter aus der Gruppe:
Hardware-Adresse eines Kommunikationsendpunktes,
IP-Adresse eines Kommunikationsendpunktes,
Anwendungsprotokoll, mit dem die Daten ausgetauscht werden und
Nachricht, die mit den ausgetauschten Daten kommuniziert wird,
umfassen. Dann kann nicht nur eine Überwachung auf Fehler und Störungen hin übernommen werden, sondern es werden tiefere Einblicke in das Steuerungssystem zum Zwecke des Qualitätsmanagements ermöglicht.

Weiterhin kann die Erfindung in Gestalt eines Computerprogrammprodukts verwirklicht werden, das von einem computernutzbaren oder computerlesbaren Medium zugänglich ist und einen Programmcode für die Benutzung durch oder für die Benutzung in Verbindung mit einem Computer oder jeden Befehlsausführungssystem bereitgestellt ist. Daher wird auch selbständiger Schutz beansprucht für ein Computerprogrammprodukt, das auf einem für einen Computer lesbaren Medium gespeichert ist und für den Computer lesbare Programmmittel umfasst, die den Computer veranlassen, das erfindungsgemäße Verfahren auszuführen, wenn die Programmmittel auf dem Computer ausgeführt werden, wie in Anspruch 14 definiert.

Für die Zwecke dieser Beschreibung können computernutzbare oder computerlesbare Medien alle Einrichtungen oder Vorrichtungen sein, die das Programm für die Benutzung durch oder die Benutzung in Verbindung mit dem Befehlsausführungssystem, der Vorrichtung oder der Einrichtung enthalten, speichern, kommunizieren, verbreiten oder transportieren. Dabei können auch mobile Kommunikationsmittel, beispielsweise Mobiltelefone, Tabletcomputer und dgl. eingesetzt werden.

Das Medium kann ein elektronisches, magnetisches, optisches, elektromagnetisches, Infrarot- oder Halbleitersystem (oder Vorrichtung oder Einrichtung) sein oder ein Ausbreitungsmedium. Beispiele eines computerlesbaren Mediums umfassen einen Halbleiter oder Feststoffspeicher, Magnetband, eine entfernbare Computerdiskette, einen Random Access Memory (RAM), einen Read-only Memory (ROM), eine feste magnetische Disk und eine optische Disk. Gegenwärtige Beispiele von optischen Disks umfassen Compactdisk-Read-only Memory (CD-ROM), Compactdisk-Read/Write (CD-R/W) und DVD.

Ein Datenverarbeitungssystem, das geeignet ist, den Programmcode zu speichern und/oder auszuführen, umfasst wenigstens einen Prozessor, der direkt oder indirekt mit zumindest einem Speicherelement durch einen Systembus verbunden ist. Das Speicherelement kann lokalen Speicher umfassen, der während der aktuellen Ausführung des Programmcodes tätig wird, Massenspeicher und Pufferspeicher, der eine temporäre Speicherung von wenigstens einigen Programmcodes bereitstellt, um die Anzahl an Abrufen des Codes vom Massenspeicher während der Ausführung zu reduzieren.

Eingabe/Ausgabe- oder I/O-Einrichtungen, die Tastaturen, Displays, Zeigeeinrichtungen etc. umfassen können, jedoch nicht darauf limitiert sind, können mit dem System entweder direkt oder durch zwischen geschaltete I/O-Controller an das System angekoppelt sein.

Netzwerkadapter können ebenfalls mit dem System verbunden sein, um zu ermöglichen, dass das Daten verarbeitende System mit anderen Datenverarbeitungssystemen oder entfernten Druckern oder Speichereinrichtungen durch zwischengeschaltete private oder öffentliche Netzwerke angekoppelt wird. Modems, Kabelmodems oder Ethernet-Karten sind in diesem Zusammenhang nur einige Beispiele der gegenwärtig verfügbaren Typen von Netzwerkadaptern.

Die Kennzeichen und weitere Vorteile der vorliegenden Erfindung werden im Folgenden anhand der Beschreibung eines bevorzugten Ausführungsbeispiels im Zusammenhang mit den Figuren deutlich werden, Dabei zeigen rein schematisch:
- Fig. 1: die erfindungsgemäße Überwachung eines Steuerungssystems in einer ersten bevorzugten Ausgestaltung,
- Fig. 2: die erfindungsgemäße Überwachung eines Steuerungssystems in einer zweiten bevorzugten Ausgestaltung,
- Fig. 3: die erfindungsgemäße Überwachung eines Steuerungssystems in einer dritten bevorzugten Ausgestaltung
- Fig. 4: Blockbilddarstellung der Analyse der Datentypen aus den erfassten Daten und
- Fig. 5: Flussbilddarstellung der Meldungserzeugung.

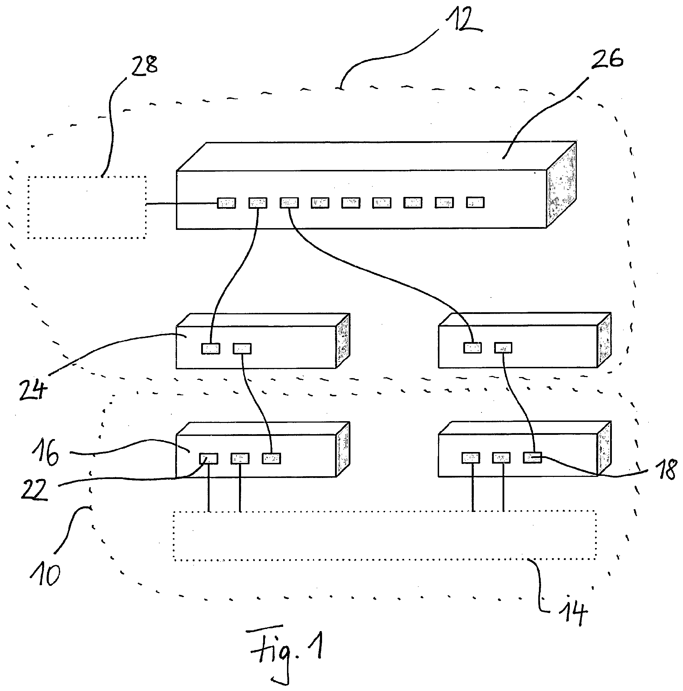

In Fig. 1 ist für ein Steuerungssystem 10 eine erste bevorzugt Ausgestaltung der erfindungsgemäßen Überwachung mittels der Vorrichtung 12 zur Überwachung des Steuerungssystems 10 rein schematisch dargestellt.

Es ist zu erkennen, dass es sich bei dem Steuerungssystem 10 um ein industrielles Steuerungssystem 10 handelt, wie es beispielsweise im Rahmen einer Fertigungsstraße (nicht gezeigt) eingesetzt wird, um die Aktionen einzelnen Vorrichtungen (nicht gezeigt) der Fertigungsstraße zu steuern und miteinander zu synchronisieren. Dieses Steuerungssystem 10 basiert beispielsweise auf dem Standard Ethernet. Dabei sind die Vorrichtungen der Fertigungsstraße beispielsweise als sternförmiges Kommunikationsnetz 14 angeordnet.

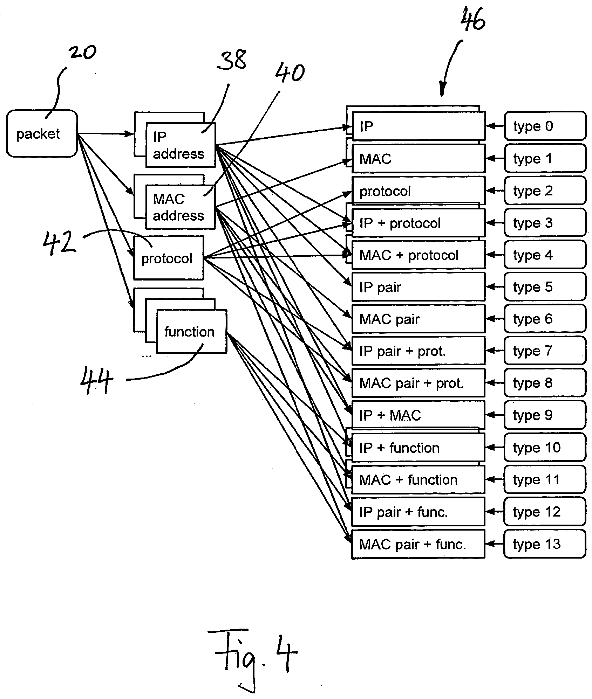

An verschiedenen Stellen, vorliegend an den Knoten des sternförmigen Netzes 14 sind sogenannte Switchs 16 angeordnet, die mit Spiegelports 18 ausgerüstet sind. Diese Spiegelports 18 lesen den aggregierten Datenverkehr 20 der anderen Ports 22, also die im Steuerungssystem 10 kommunizierten Daten 20 (vgl. Fig. 4), rein passiv mit ohne diese Daten 20 zu verändern und speisen diese Daten 20 zu den mit den Switchs 16 verbundenen. Sensoren 24, die ihrerseits mit einer zentralen Steuerungseinheit 26 verbunden sind. Diese zentrale Steuerungseinheit 26 ist mit einer Bedieneinheit 28 verbunden, mit der zum einen Updates der Vorrichtung 12 und zum anderen deren Konfiguration und die Auswertung der erlangten Ergebnisse vorgenommen wird.

Die Sensoren 24 können körperlich vorliegen oder auch als Software, beispielsweise in der Form von Applikationen. Sie leiten den Datenverkehr 20 weiter auf die Steuerungseinheit 26, damit diese zentral angeordnet werden kann. Außerdem bewirken sie eine Multiplikation der Verteilungsmöglichkeiten des mitgeschnittenen Datenverkehrs. Darüber hinaus bilden sie einen Puffer für die Daten 20, so dass keine Verwirrung und auch kein Datenverlust auftreten. Dabei sollte die Taktung des Spiegelports 18 bevorzugt so hoch sein, wie die Summe der Taktungen der gespiegelten Ports 22. Außerdem nehmen die Sensoren 24 eine Verpackung der Daten 20 vor, so dass anschließend keine erneute Vermittlung an die Adressaten der Daten versucht wird. Diese Verpackung wird dann bei der Analyse der Daten 20 als erstes wieder entfernt.

Zwischen den Sensoren 24 und der zentralen Steuerungseinheit 26 kann ggf. noch eine zusätzliche Switchebene (nicht gezeigt) eingefügt werden. Außerdem kann neben der Auswertung des Datenverkehrs 20 und einem möglichen Qualitätsmanagement in der zentralen Steuereinheit 26 auch die Software für die Sensoren 24 arbeiten.

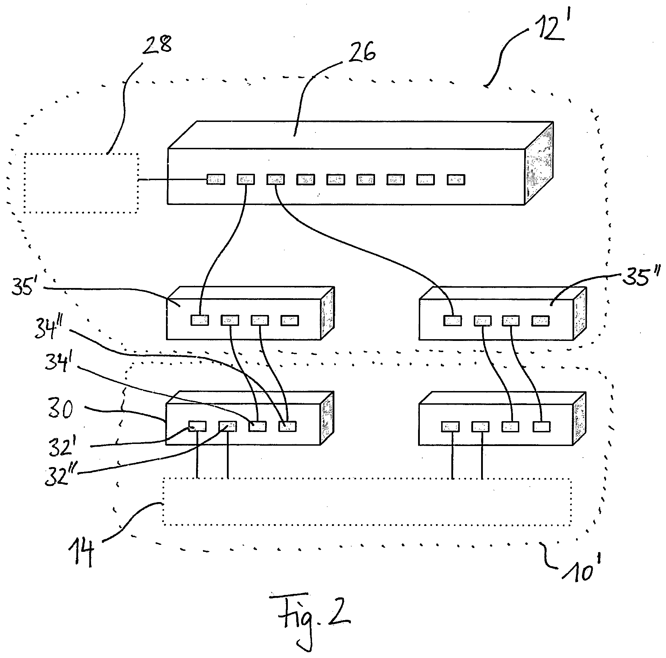

Im Unterschied zu Fig. 1 werden bei der Überwachungsvorrichtung 12' der Fig. 2 keine Switchs verwendet, sondern sogenannte Netzwerk-taps 30, bei denen jedem Port 32', 32" ein eigener Port 34', 34" zugeordnet ist, der die Daten 20 des jeweiligen Ports 32', 32" unabhängig von dem übrigen in dem Steuerungssystem 10' laufenden Datenverkehr 20 passiv an die Sensor 35', 35" weiterreicht.

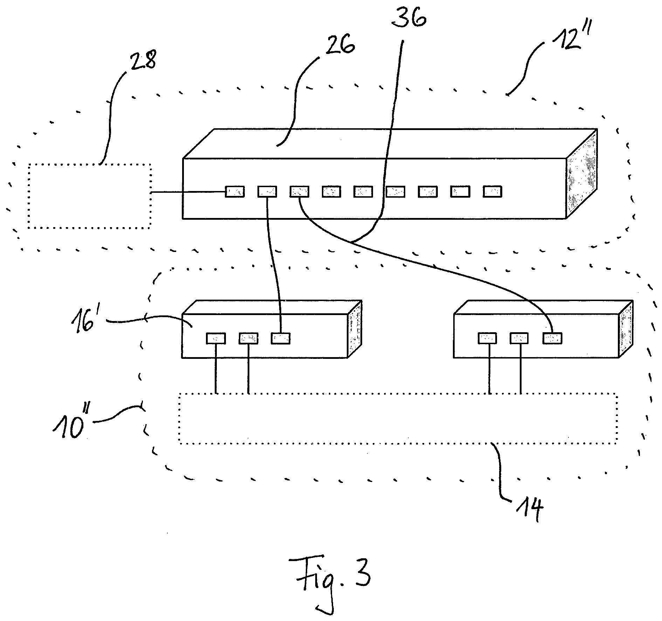

In Fig. 3 sind in dieser Überwachungsvorrichtung 12" wiederum sind Switchs 16' eingesetzt mit Spiegelports 18, allerdings werden hier keine dedizierten Sensoren verwendet, sondern der Datenverkehr 20 in dem Steuerungssystem 10" wird direkt von den Switchs 16' an die zentrale Steuerungseinheit 26 weitergeleitet, beispielsweise über Wurfkabel 36 oder auch per Funk. Die Sensoren werden hier also durch die Spiegelports 18 und das Wurfkabel 36 verkörpert.

In Fig. 4 ist zu erkennen, dass die von den Sensoren 24, 35', 35" ausgelesenen Daten 20 zuerst auf die in den Daten 20 enthaltenen Kommunikationsparameter analysiert werden, nämlich auf die beteiligten IP-Adressen 38 und MAC-Adressen 40 der an der Kommunikation beteiligten Vorrichtungen der Fertigungsstraße, dem im Rahmen der Kommunikation benutzten Anwendungsprotokoll 42 und den im Rahmen der Kommunikation tatsächlich ausgetauschten Nachrichten. Dabei kann es sich um ein oder mehrere Nachrichten handeln.

Im gezeigten Beispiel wird angenommen, dass an der Kommunikation jeweils zwei Vorrichtungen beteiligt sind, weshalb zwei unterschiedliche IP-Adressen 38 und MAC-Adressen 42 analysiert werden. Das Anwendungsprotokoll 44 ist entweder ein proprietäres gerätespezifisches Protokoll oder beispielsweise das Anwendungsprotokoll Profinet der Firma Siemens. Die ausgetauschten Nachrichten betreffen beispielsweise die Aufforderung zur Synchronisation, Fehlermeldungen, die Aufforderung zur bzw. die anschließende Durchführung einer Authentifizierung oder dgl. Dabei werden im Rahmen der bevorzugt durchgeführten Analyse nicht die eigentlichen Nachrichten, also die exakten Inhalte der Nachrichten verarbeitet, sondern aus diesen Nachrichten werden die zugrundeliegenden Nachrichtentypen 44 ermittelt, also Synchronisationsbefehle, Fehlermeldungen, Authentifizierungsbefehle und dgl. Es können dabei verschiedene Nachrichtentypen 44 auftreten, wie in Fig.4 gezeigt ist.

Aus diesen Kommunikationsparametern 38, 40, 42, 44 werden nun 14 verschiedene Datentypen 46 (type 0 bis type 13) erzeugt, in dem einzelne dieser Kommunikationsparameter 38, 40, 42, 44 verwendet und/oder miteinander kombiniert werden. Diese Datentypen 46 liegen dann wiederum entweder einfach vor, wie beispielsweise type 3 oder aufgrund der zwei miteinander kommunizierenden Vorrichtungen doppelt, wie beispielsweise type 9. In Abhängigkeit von der Anzahl Nachrichtentypen 44 liegen die Typen 10, 11, 12 und 13 entsprechend vervielfacht vor.

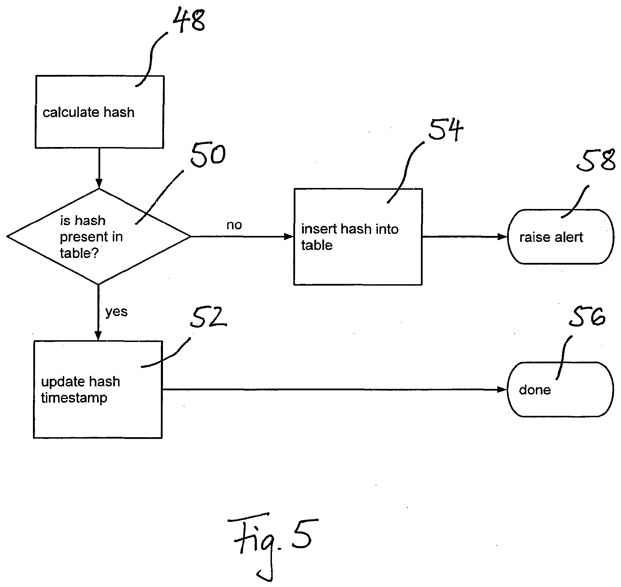

Entsprechend Fig. 5 werden dann aus jedem Datentyp 46, sobald er erfasst wurde, die zugehörigen Hashwerte 48 berechnet. Dann wird in einem Speicher (nicht gezeigt), der in dem Sensor 24, 35', 35" selbst (vgl. Fig. 1 und 2) oder in der zentralen Steuerungseinheit 26 angeordnet sein kann, verglichen 50, ob dieser Hashwert schon vorhanden ist und der Zeitstempel dieses Hashwertes aktualisiert 52, wenn er schon vorhanden ist, oder der Hashwert wird mit dem aktuellen Zeitstempel versehen abgespeichert 54, wenn der Hashwert noch nicht im Speicher vorhanden war.

Im Fall dass der Zeitstempel aktualisiert wurde, weil der Hashwert schon im Speicher vorhanden war 52, wird nichts weiter unternommen 56. Wenn dagegen ein neuer Hashwert im Speicher abgespeichert wird 54, dann lag eine völlig neue Art der Kommunikation vor und es wird eine Meldung 58 erzeugt, die darauf hinweist, da es sich um eine völlig neue Kommunikation handelt, die bisher noch nicht in dem Steuerungssystem 10 aufgetreten ist. Beispielsweise kommunizieren nun zwei Vorrichtungen miteinander, die dies bisher noch nie taten (typ 5) oder es werden zwischen zwei Vorrichtungen Nachrichtentypen ausgetauscht, die bisher noch nie zwischen diesen Vorrichtungen ausgetauscht wurde (type 12). Da die Kommunikation in einem Steuerungssystem 10 deterministisch ist und im normalen Betrieb keine neue, unerwartete Kommunikation auftreten kann, könnte es sich bei dieser gemeldeten neuen Kommunikation um einen Fehler, eine Störung oder sogar um einen unautorisierten Angriff von außen handeln.

Die erzeugte Meldung 58 wird dann je nach Ausgestaltung der erfindungsgemäßen Überwachung vom Überwachungspersonal daraufhin untersucht, ob tatsächlich ein kritischer Zustand des Steuerungssystems 10 vorliegt und was ggf. weiter zu veranlassen ist. Oder die Meldung ist mit einem Automatismus verbunden, der selbständig bestimmte Aktionen zur Sicherung des Steuerungssystems 10 vornimmt, wozu im Extremfall auch dessen kontrolliertes Herunterfahren und Abschalten zählen kann.

Die Meldungen 58 können nur den Hinweis auf den ermittelten neuen Hashwert beinhalten oder auch detaillierte Angaben zu den Kommunikationsparametern bzw. den Datentypen oder den kommunizierten Nachrichten. Außerdem können diese Meldungen 58 an ein geeignetes Qualitätsmanagement übergeben werden. Dort kann dann ein Abgleich zwischen ermittelter Qualität und Kommunikationsstörungen vorgenommen werden, um beispielsweise Qualitätsverluste fehlerursächlich bestimmten Störungen in der Kommunikation zuordnen zu können oder auch feststellen zu könne, dass zwar bestimmte Kommunikationsfehler auftreten, diese jedoch keinen Einfluss auf die erzielte Qualität haben. In letzteren Fall könnte die Meldung 58 dann in der Zukunft unterlassen werden und der zugrundeliegende Kommunikationszustand als Normfall des Steuerungssystems angesehen werden.

Wenn sich schließlich herausstellt, dass der neue Hashwert mit einem unerwünschten Zustand des Steuerungssystems 10 verknüpft ist, kann nach erfolgter Auswertung bzw. durchgeführtem Automatismus ein Löschen dieses Hashwertes aus dem Speicher erfolgen, damit dieser Zustand über diesen Hashwert bei nächsten Mal wieder als Abweichung vom Normzustand erkannt werden kann.

Es ist zu erkennen, dass die erfindungsgemäße Überwachung dadurch erfolgt, dass die üblicherweise in dem Steuerungssystem 10 vorkommende Kommunikation gelernt, also typisiert und abgespeichert wird und dann bei Auftreten eines neuen Kommunikationstyps eine Meldung 58 erzeugt wird, die darauf hinweist. In diesem Zusammenhang ist der Inhalt der Kommunikation im Wesentlichen egal, sondern kommt nur darauf an, ob die Kommunikation typisch ist, also bei einem Normalbetrieb auftreten würde. Dadurch werden Anomalien in der Kommunikation sofort erfasst.

Die erfindungsgemäße Überwachung kann nun auf zwei unterschiedliche Weisen verwendet werden. Entweder wird ein Einschwingvorgang durchgeführt, bei dem alle Kommunikation abgespeichert wird und erst anschließend wird die Überwachung "scharf gestellt" oder es wird von Anfang an überwacht. Die erste Variante ist zeitunaufwändiger, allerdings besteht auch die Gefahr, dass anomale Kommunikation mit abgespeichert und damit als normal behandelt wird, so dass deren Auftreten später nicht mehr gemeldet werden würde. Die zweite Variante ist zeitintensiver, da jede neue Kommunikation zu einer Meldung 58 führt, die dann vom Überwachungspersonal zu kontrollieren ist, allerdings werden dadurch Fehler im Wesentlichen komplett ausgeschlossen.

Im Gegensatz zur bisher bekannten Überwachung von Parametern einzelner Vorrichtungen, sind diese Parameter jetzt weniger bzw. gar nicht interessant, Stattdessen erfolgt eine Überwachung der Gesamtkommunikation in dem Steuerungssystem, um dessen ordnungsgemäßes Funktionieren sicher zu stellen. Aufgrund der reinen Hashwert-Vergleiche 36, erfolgt die Überwachung besonders schnell und ressourcenschonend. Anstelle von Hashwerten 50 können natürlich auch andere Identifizierer verwendet werden, die eine eindeutige Zuordnung zulassen.

Aus der vorstehenden Darstellung ist deutlich geworden, dass mit der vorliegenden Erfindung eine Überwachung bereitgestellt wird, die in Steuerungssystemen, insbesondere in industriellen Steuerungssystemen, Fehler im Rahmen der Kommunikation besonders schnell und sicher erkennt. Diese Fehler können nachträglich ggf. mit einem Qualitätsmanagement gekoppelt werden, um festzustellen, ob Qualitätsverluste mit solchen erkannten Fehlern korrelieren.

Soweit nichts anders angegeben ist, können sämtliche Merkmale der vorliegenden Erfindung frei miteinander kombiniert werden. Auch die in der Figurenbeschreibung beschriebenen Merkmale können, soweit nichts anderes angegeben ist, als Merkmale der Erfindung frei mit den übrigen Merkmalen kombiniert werden. Dabei können gegenständliche Merkmale der Vorrichtung auch im Rahmen des Verfahrens Verwendung finden und Verfahrensmerkmale im Rahmen der Vorrichtung.

### Bezugszeichenliste

- 10, 10', 10": Steuerungssystem
- 12, 12', 12": Vorrichtung zur Überwachung des Steuerungssystems 10
- 14: sternförmiges Kommunikationsnetz
- 16: Switchs
- 18: Spiegelports der Switchs 14
- 20: Datenverkehr, Daten
- 22: Ports der Switchs 16
- 24: Sensoren
- 26: zentrale Steuerungseinheit
- 28: Bedieneinheit der zentralen Steuerungseinheit 26
- 30: Netzwerk-taps
- 32', 32": Ports der Netzwerk-taps 30
- 34', 34": Ports der Netzwerk-taps 30, Replizierungsports
- 36: Wurfkabel
- 38: IP-Adressen
- 40: MAC-Adressen
- 42: Anwendungsprotokoll
- 44: Nachrichtentypen
- 46: Datentypen (type 0 bis type 13)
- 48: Berechnung der Hashwerte
- 50: Vergleichen Hashwert mit Speicher
- 52: Hashwert aktualisieren
- 54: Hashwert mit aktuellem Zeitstempel versehen und abspeichern
- 56: Ende
- 58: Erzeugung von Meldung

## Patentansprüche

1. Verfahren zur Überwachung von Steuerungssystemen (10, 10', 10"), wobei das Steuerungssystem (10, 10', 10") zumindest ein Kommunikationsnetzwerk (14) und zumindest zwei mit dem Kommunikationsnetzwerk (14) verbundene Kommunikationsendpunkte aufweist, die über das Kommunikationsnetzwerk (14) Daten (20) austauschen, wobei die zwischen den Kommunikationsendpunkten ausgetauschten Daten (20) erfasst und nach Vergleich der aktuell erfassten Daten (20), die zwischen den Kommunikationsendpunkten ausgetauscht werden, mit zuvor erfassten Daten (20), die zwischen den Kommunikationsendpunkten ausgetauscht wurden, bei Erfassung neuer Daten (20) eine Meldung (58) erzeugt wird, wobei die ausgetauschten Daten (20) dahingehend deterministisch sind, dass keine neue Daten (20) im normalen Betrieb des Steuerungssystems (10, 10', 10") von den zumindest zwei Kommunikationsendpunkten erzeugt werden, wobei die Überwachung außerhalb des bestehenden Kommunikationsnetzwerks (14) besteht und die Daten (20) passiv abgefasst werden, wobei die ausgetauschten Daten (20) auf darin enthaltene Kommunikationsparameter (38, 40, 42, 44) analysiert werden, wobei die Kommunikationsparameter (38, 40, 42, 44) zumindest einen Parameter aus der Gruppe:
- Hardware-Adresse (38) des an der Kommunikation beteiligten Kommunikationsendpunktes,
- IP-Adresse (40) des an der Kommunikation beteiligten Kommunikationsendpunktes,
- Anwendungsprotokoll (42), mit dem die Daten (20) ausgetauscht werden und
- Nachricht, die mit den ausgetauschten Daten (20) kommuniziert wird,
umfassen, wobei das zur Kommunikation der neuen Daten verwendete Anwendungsprotokoll ermittelt wird, um die anderen Kommunikationsparameter zu bestimmen, wobei zur Analyse des verwendeten Anwendungsprotokolls (42) die ausgetauschten Daten (20) auf die einem bekannten Anwendungsprotokoll (42) zugehörigen Muster hin und/oder heuristisch untersucht werden, wobei aus den analysierten Kommunikationsparametern (38, 40, 42, 44) Kombinationen zur Definierung von Datentypen (46) gebildet werden, wobei die Meldung nach Erfassung eines neuen Datentyps (46) erzeugt wird.

2. Verfahren nach Anspruch 1, **dadurch gekennzeichnet, dass** das Anwendungsprotokoll (42) ein Schicht-7-Protokoll nach dem OSI-Modell ist, das insbesondere aus der Gruppe: Profinet, Modbus, Ethercat oder gerätespezifischen Protokollen der Kommunikationsendpunkte gewählt ist.

3. Verfahren nach Anspruch 2, **dadurch gekennzeichnet, dass** die Datentypen (46) zumindest eine Kombination von Kommunikationsparametern (38, 40, 42, 44) aus der Gruppe:
- Hardware-Adresse des an der Kommunikation beteiligten Kommunikationsendpunktes,
- IP-Adresse des an der Kommunikation beteiligten Kommunikationsendpunktes,
- Anwendungsprotokoll, mit dem die Daten ausgetauscht werden,
- Hardware-Adresse des an der Kommunikation beteiligten Kommunikationsendpunktes kombiniert mit dem Anwendungsprotokoll, mit dem die Daten ausgetauscht werden,
- IP-Adresse des an der Kommunikation beteiligten Kommunikationsendpunktes kombiniert mit dem Anwendungsprotokoll, mit dem die Daten ausgetauscht werden,
- Kombination der Hardware-Adressen der an der Kommunikation beteiligten Kommunikationsendpunkte,
- Kombination der IP-Adressen der an der Kommunikation beteiligten Kommunikationsendpunkte,
- Kombination der Hardware-Adressen der an der Kommunikation beteiligten Kommunikationsendpunkte und des Anwendungsprotokolls, mit dem die Daten ausgetauscht werden,
- Kombination der IP-Adressen der an der Kommunikation beteiligten Kommunikationsendpunkte und des Anwendungsprotokolls, mit dem die Daten ausgetauscht werden,
- Kombination der Hardware-Adresse und der IP-Adresse des an der Kommunikation beteiligten Kommunikationsendpunktes,
- Kombination der Hardware-Adresse und der Nachricht des an der Kommunikation beteiligten Kommunikationsendpunktes,
- Kombination der IP-Adresse und der Nachricht des an der Kommunikation beteiligten Kommunikationsendpunktes,
- Kombination der Hardware-Adressen der an der Kommunikation beteiligten Kommunikationsendpunkte und der Nachricht und
- Kombination der IP-Adressen der an der Kommunikation beteiligten Kommunikationsendpunkte und der Nachricht umfassen,
wobei insbesondere vorgesehen ist, dass die Meldung bei Erfassung eines neuen Datentyps erzeugt wird.

4. Verfahren nach einem der Ansprüche 2 oder 3, **dadurch gekennzeichnet, dass** zur Analyse der kommunizierten Nachricht die ausgetauschten Daten (20) mithilfe des Anwendungsprotokolls (42) dekodiert werden, wobei als Kommunikationsparameter bevorzugt anstelle der Nachricht der Nachrichtentyp (44) der Nachricht verwendet wird, der aus der Nachricht analysiert wird, wobei der Nachrichtentyp (44) insbesondere einer aus der Gruppe: Fehlermeldung, Befehl zur Authentifizierung, Befehl zum Lesen von Daten, Befehl zum Schreiben von Daten und Befehl zur Zeitsynchronisation von zwei Kommunikationsendpunkten ist.

5. Verfahren nach einem der vorherigen Ansprüche, **dadurch gekennzeichnet, dass** aus den neuen Daten (20) oder dem neuen Datentyp (46) mittels einer Streuwertfunktion ein Hashwert (48) gebildet wird.

6. Verfahren nach einem der vorherigen Ansprüche, **dadurch gekennzeichnet, dass** die neuen Daten (20), die neuen Datentypen (46) und/oder die zugehörigen Hashwerte (48) in einem Speicher, vorzugsweise mit einer indizierten Datenstruktur abgelegt werden, wobei die neuen Daten, die neuen Datentypen bzw. die zugehörigen Hashwerte bevorzugt chronologisch, insbesondere zusammen mit einem Zeitstempel abgelegt werden.

7. Verfahren nach Anspruch 6, **dadurch gekennzeichnet, dass** die Zeitstempel bei Wiederauftreten der Daten (20), der Datentypen (46) bzw. Hashwerte (48) aktualisiert werden, wobei die Zeitstempel zu jeden Daten, Datentypen bzw. Hashwerten gesammelt werden.

8. Verfahren nach Anspruch 6 oder 7, **dadurch gekennzeichnet, dass** die Zeitstempel für einen vorgegebenen Zeitraum abgespeichert werden.

9. Verfahren nach einem der vorherigen Ansprüche, **dadurch gekennzeichnet, dass** die ausgetauschten Daten (20) auf ausbleibende Kommunikation hin analysiert werden.

10. Vorrichtung (12, 12', 12") zur Überwachung von Steuerungssystemen (10, 10', 10"), wobei das Steuerungssystem (10, 10', 10") zumindest ein Kommunikationsnetzwerk (14) und zumindest zwei mit dem Kommunikationsnetzwerk (14) verbundene Kommunikationsendpunkte aufweist, die über das Kommunikationsnetzwerk Daten (20) austauschen,
wobei Mittel (24, 30, 35', 35") zum Erfassen der zwischen den Kommunikationsendpunkten ausgetauschten Daten (20) vorgesehen sind und Mittel (26) zum Vergleich der aktuell erfassten Daten (20), die zwischen den Kommunikationsendpunkten ausgetauscht werden, mit zuvor erfassten Daten (20), die zwischen den Kommunikationsendpunkten ausgetauscht wurden, vorgesehen sind, die ausgebildet sind, bei Erfassung neuer Daten (20) eine Meldung (58) zu erzeugen, wobei die ausgetauschten Daten dahingehend deterministisch sind, dass keine neue Daten im normalen Betrieb des Steuerungssystems (10, 10', 10") von den zumindest zwei Kommunikationsendpunkten erzeugt werden, wobei die Vorrichtung (12, 12', 12") angepasst ist, die Überwachung außerhalb des bestehenden Kommunikationsnetzwerks (14) vorzunehmen und die Daten (20) passiv abzufassen, wobei die Vorrichtung angepasst ist, die ausgetauschten Daten (20) auf darin enthaltene Kommunikationsparameter (38, 40, 42, 44) zu analysieren, wobei die Kommunikationsparameter (38, 40, 42, 44) zumindest einen Parameter aus der Gruppe:
- Hardware-Adresse (38) des an der Kommunikation beteiligten Kommunikationsendpunktes,
- IP-Adresse (40) des an der Kommunikation beteiligten Kommunikationsendpunktes,
- Anwendungsprotokoll (42), mit dem die Daten (20) ausgetauscht werden und
- Nachricht, die mit den ausgetauschten Daten (20) kommuniziert wird,
umfassen, wobei das zur Kommunikation der neuen Daten verwendete Anwendungsprotokoll ermittelt wird, um die anderen Kommunikationsparameter zu bestimmen, wobei zur Analyse des verwendeten Anwendungsprotokolls (42) die ausgetauschten Daten (20) auf die einem bekannten Anwendungsprotokoll (42) zugehörigen Muster hin und/oder heuristisch untersucht werden, wobei aus den analysierten Kommunikationsparametern (38, 40, 42, 44) Kombinationen zur Definierung von Datentypen (46) gebildet werden, wobei die Meldung nach Erfassung eines neuen Datentyps erzeugt wird.

11. Vorrichtung (12, 12', 12") nach Anspruch 10, **dadurch gekennzeichnet, dass** die Vorrichtung (12, 12', 12") angepasst ist, das Verfahren nach einem der Ansprüche 1 bis 8 durchzuführen und/oder dass zumindest ein Sensor (24, 35', 35") vorgesehen ist, der mit dem Kommunikationsnetzwerk (14) verbunden ist und angepasst ist, die ausgetauschten Daten (20) ohne Veränderung dieser ausgetauschten Daten (20) zu erfassen.

12. Vorrichtung (12, 12', 12") nach Anspruch 11, **dadurch gekennzeichnet, dass** der Sensor (24, 35', 35") eingerichtet ist, mittels einer Streuwertfunktion Hashwerte (48) zu berechnen, wobei der Sensor (24, 35', 35") bevorzugt angepasst ist, die Hashwerte (48) zu speichern, wobei der Speicher insbesondere eine indizierte Datenstruktur aufweist.

13. Vorrichtung (12, 12', 12") nach Anspruch 11 oder 12, **dadurch gekennzeichnet, dass** der Sensor (24, 35', 35") eingerichtet ist, zumindest die neuen Daten (20) einem Qualitätsmanagement zuzuführen, wobei die Vorrichtung (12) angepasst ist, die neuen Daten (20) auf darin enthaltene Kommunikationsparameter (38, 40, 42, 44) zu analysieren, wobei die Kommunikationsparameter (38, 40, 42, 44) bevorzugt zumindest einen Parameter aus der Gruppe:
Hardware-Adresse eines Kommunikationsendpunktes,
IP-Adresse eines Kommunikationsendpunktes,
Anwendungsprotokoll, mit dem die Daten ausgetauscht werden und
Nachricht, die mit den ausgetauschten Daten kommuniziert wird,
umfassen.

14. Computerprogrammprodukt, das auf einem für einen Computer lesbaren Medium gespeichert ist, umfassend für den Computer lesbare Programmmittel, die den Computer veranlassen, ein Verfahren nach einem der Ansprüche 1 bis 9 auszuführen, wenn die Programmmittel auf dem Computer ausgeführt werden.

## Claims

1. A method for monitoring control systems (10, 10', 10"), wherein the control system (10, 10', 10") has at least one communication network (14) and at least two communication end points connected to the communication network (14), which communication end points exchange data (20) via the communication network (14), wherein the data (20) exchanged between the communication end points is acquired and after comparing the currently acquired data (20) with previously acquired data (20), an alert (58) is raised when new data is acquired (20), wherein the exchanged data (20) are deterministic in that no new data (20) are generated in the normal operation of the control system (10, 10', 10") by the at least two communication end points, wherein the monitoring exists outside the existing communication network (14) and the data (20) is passively captured, wherein the exchanged data (20) are analyzed for communication parameters (38, 40, 42, 44) contained therein, wherein the communication parameters (38, 40, 42, 44) preferably comprise at least one parameter from the group:
- hardware address (38) of the communication end point involved in the communication,
- IP address (40) of the communication end point involved in the communication,
- application protocol (42) with which the data (20) are exchanged and
- message that is communicated with the exchanged data (20),
wherein the application protocol used to communicate the new data is determined in order to determine the other communication parameters, wherein for analyzing the application protocol (42) used the exchanged data (20) are examined heuristically and/or on the patterns associated with a known application protocol (42), wherein combinations for defining data types (46) are formed from the analyzed communication parameters (38, 40, 42, 44), wherein the alert is raised upon acquisition of a new data type (46).

2. The method according to claim 1, **characterized in that** the application protocol (42) is a layer 7 protocol according to the OSI model, which in particular is selected from the group: Profinet, Modbus, Ethercat or device-specific protocols of communication end points.

3. The method according to claim 2, **characterized in that** the data types (46) preferably comprise a combination of communication parameters (38, 40, 42, 44) from the group:
- hardware address of the communication end point involved in the communication,
- IP address of the communication end point involved in the communication,
- application protocol with which the data are exchanged,
- hardware address of the communication end point involved in the communication combined with the application protocol with which the data are exchanged,
- IP address of the communication end point involved in the communication combined with the application protocol with which the data are exchanged,
- combination of the hardware addresses of the communication end points involved in the communication,
- combination of the IP addresses of the communication end points involved in the communication,
- combination of the hardware addresses of the communication end points involved in the communication and the application protocol with which the data are exchanged,
- combination of the IP addresses of the communication end points involved in the communication and the application protocol with which the data are exchanged,
- combination of the hardware address and the IP address of the communication end point involved in the communication,
- combination of the hardware address and the message of the communication end point involved in the communication,
- combination of the IP address and the message of the communication end point involved in the communication,
- combination of the hardware addresses of the communication end points involved in the communication and the message and
- combination of the IP addresses of the communication end points involved in the communication and the message,
wherein in particular it is provided that the alert is raised upon acquisition of a new data type.

4. The method according to one of claims 2 or 3, **characterized in that**, for the analysis of the communicated message, the exchanged data (20) are decoded with the aid of the application protocol (42), wherein the message type (44) of the message is preferably used as a communication parameter instead of the message, which is analyzed from the message, wherein the message type (44) in particular is one of the group: error message, command to authenticate, command to read data, command to write data and command to synchronize time of two communication end points.

5. The method according to one of the preceding claims, **characterized in that** a hash value (48) is formed from the new data (20) or the new data type (46) by means of a hash function.

6. The method according to one of the preceding claims, **characterized in that** the new data (20), the new data types (46) and/or the associated hash values (48) are stored in a memory, preferably with an indexed data structure, wherein the new data, the new data types or the associated hash values are preferably stored chronologically, in particular together with a timestamp.

7. The method according to claim 6, **characterized in that** the timestamps are updated when the data (20), the data types (46) or hash values (48) reoccur, wherein the timestamps are collected for each data, data type or hash value.

8. The method according to claim 6 or 7, **characterized in that** the timestamps are stored for a predetermined period.

9. The method according to one of the preceding claims, **characterized in that** the exchanged data (20) are analyzed for an absence of communication.

10. A device (12, 12', 12") for monitoring control systems (10, 10', 10"), wherein the control system (10, 10', 10") has at least one communication network (14) and at least two communication end points connected to the communication network (14), which communication end points exchange data (20) via the communication network, wherein means (24, 30, 35', 35") are provided for acquiring the data (20) exchanged between the communication end points data and means (26) are provided for comparing the currently acquired data (20) with previously acquired data (20), which are configured to raise an alert (58) when new data (20) are acquired, wherein the exchanged data are deterministic in that no new data are generated in the normal operation of the control system (10, 10', 10") by the at least two communication end points, wherein the device (12, 12', 12") is adapted to make the monitoring outside of the existing communication network (14) and to passively capture the data, wherein the device is adapted to analyze the exchanged data (20) for communication parameters (38, 40, 42, 44) contained therein, wherein the communication parameters (38, 40, 42, 44) comprise at least one parameter from the group:
- hardware address (38) of the communication end point involved in the communication,
- IP address (40) of the communication end point involved in the communication,
- application protocol (42) with which the data (20) are exchanged and
- message that is communicated with the exchanged data (20),
wherein the application protocol used to communicate the new data is determined in order to determine the other communication parameters, wherein for analyzing the application protocol (42) used the exchanged data (20) are examined heuristically and/or on the patterns associated with a known application protocol (42), wherein combinations for defining data types (46) are formed from the analyzed communication parameters (38, 40, 42, 44), wherein the alert is raised upon acquisition of a new data type.

11. The device (12, 12', 12") according to claim 10, **characterized in that** the device (12, 12', 12") is adapted to perform the method according to one of claims 1 to 8 and/or that at least one sensor (24, 35', 35") is provided, which is connected to the communication network (14) and is adapted to acquire the exchanged data (20) without changing this exchanged data (20).

12. The device (12, 12', 12") according to claim 11, **characterized in that** the sensor (24, 35', 35") is arranged to calculate hash values (48) by means of a hash function, wherein the sensor (24, 35', 35") is preferably adapted to store the hash values (48), wherein the memory in particular has an indexed data structure.

13. The device (12, 12', 12") according to claim 11 or 12, **characterized in that** the sensor (24, 35', 35") is configured to provide at least the new data (20) to a quality management, wherein the device (12) is adapted to analyze the new data (20) for communication parameters (38, 40, 42, 44) contained therein, wherein the communication parameters (38, 40, 42, 44) preferably comprise at least one parameter from the group:
hardware address of a communication end point,
IP address of a communication end point,
application protocol with which the data are exchanged and
message that is communicated with the exchanged data.

14. A computer program product that is stored on a computer readable medium comprising computer readable program means for causing the computer to execute a method according to one of claims 1 to 9 when the program means are executed on the computer.

## Revendications

1. Procédé de surveillance de systèmes de commande (10, 10', 10"), dans lequel le système de commande (10, 10', 10") présente au moins un réseau de communication (14) et au moins deux points terminaux de communication reliés au réseau de communication (14), qui échangent des données (20) par l'intermédiaire du réseau de communication (14), dans lequel les données (20) échangées entre les points terminaux de communication sont détectées et, après la comparaison des données (20) actuellement détectées, qui sont échangées entres les points terminaux de communication, à des données (20) détectées au préalable, qui ont été échangées entre les points terminaux de communication, un message (58) est produit lors de la détection de nouvelles données (20), dans lequel les données (20) échangées sont déterministes en ce sens qu'aucune nouvelle donnée (20) n'est produite par les au moins deux points terminaux de communication lors du fonctionnement normal du système de commande (10, 10', 10"), dans lequel la surveillance existe en dehors du réseau de communication (14) existant et les données (20) sont rédigées de manière passive, dans lequel les données (20) échangées sont analysées quant à la présence de paramètres de communication (38, 40, 42, 44) contenus dans celles-ci, dans lequel les paramètres de communication (38, 40, 42, 44) comprennent au moins un paramètre issu du groupe :
- adresse matérielle (38) du point terminal de communication impliqué dans la communication,
- adresse IP (40) du point terminal de communication impliqué dans la communication,
- protocole d'application (42), avec lequel les données (20) sont échangées, et
- notification qui est communiquée avec les données (20) échangées, dans lequel le protocole d'application utilisée pour la communication des nouvelles données est déterminé pour définir les autres paramètres de communication, dans lequel pour analyser le protocole d'application (42) utilisé, les données (20) échangées sont examinées quant à la présence d'un modèle associé à un protocole d'application (42) connu et/ou de manière heuristique, dans lequel des combinaisons destinées à définir des types de données (46) sont formées à partir des paramètres de communication (38, 40, 42, 44) analysés, dans lequel le message est produit après la détection d'un nouveau type de données (46).

2. Procédé selon la revendication 1, **caractérisé en ce que** le protocole d'application (42) est un protocole à 7 couches selon le modèle OSI, qui est choisi en particulier parmi le groupe : Profinet, Modbus, Ethercat ou des protocoles spécifiques aux appareils des points terminaux de communication.

3. Procédé selon la revendication 2, **caractérisé en ce que** les types de données (46) comprennent au moins une combinaison de paramètres de communication (38, 40, 42, 44) parmi le groupe :
- adresse matérielle du point terminal de communication impliqué dans la communication,
- adresse IP du point terminal de communication impliqué dans la communication,
- protocole d'application, avec lequel les données sont échangées,
- adresse matérielle du point terminal de communication impliqué dans la communication combinée au protocole d'application, avec lequel les données sont échangées,
- adresse IP du point terminal de communication impliqué dans la communication combinée au protocole d'application, avec lequel les données sont échangées,
- combinaison des adresses matérielles des points terminaux de communication impliqués dans la communication,
- combinaison des adresses IP des points terminaux de communication impliqués dans la communication,
- combinaison des adresses matérielles des points terminaux de communication impliqués dans la communication et du protocole d'application, avec lequel les données sont échangées,
- combinaison des adresses IP des points terminaux de communication impliqués dans la communication et du protocole d'application, avec lequel les données sont échangées,
- combinaison de l'adresse matérielle et de l'adresse IP du point terminal de communication impliqué dans la communication,
- combinaison de l'adresse matérielle et de la notification du point terminal de communication impliqué dans la communication,
- combinaison de l'adresse IP et de la notification du point terminal de communication impliqué dans la communication,
- combinaison des adresses matérielles des points terminaux de communication impliqués dans la communication et de la notification et
- combinaison des adresses IP des points terminaux de communication impliqués dans la communication et de la notification,
dans lequel il est prévu en particulier que le message est produit lors de la détection d'un nouveau type de données.

4. Procédé selon l'une quelconque des revendications 2 et 3, **caractérisé en ce que** pour analyser la notification communiquée, les données (20) échangées sont décodées à l'aide du protocole d'application (42), dans lequel le type de notification (44) de la notification est utilisé en tant que paramètre de communication de manière préférée au lieu de la notification, dans lequel le type de notification (44) est en particulier un type issu du groupe : message d'erreur, instruction d'authentification, instruction de lecture de données, instructions d'écriture de données et instruction de synchronisation dans le temps de deux points terminaux de communication.

5. Procédé selon l'une quelconque des revendications précédentes, **caractérisé en ce qu'**une valeur de hachage (48) est formée à partir des nouvelles données (20) ou du nouveau type de données (46) au moyen d'une fonction de valeur de dispersion.

6. Procédé selon l'une quelconque des revendications précédentes, **caractérisé en ce que** les nouvelles données (20), les nouveaux types de données (46) et/ou les valeurs de hachage (48) associées sont enregistrés dans une mémoire, de préférence avec une structure de données indexée, dans lequel les nouvelles données, les nouveaux types de données ou les valeurs de hachage associées sont enregistrés de manière préférée de manière chronologique, en particulier conjointement avec un horodatage.

7. Procédé selon la revendication 6, **caractérisé en ce que** les horodatages sont mis à jour lors de la réapparition des données (20), des types de données (46) ou des valeurs de hachage (48), dans lequel les horodatages sont collectés pour chaque donnée, chaque type de donnée ou chaque valeur de hachage.

8. Procédé selon la revendication 6 ou 7, **caractérisé en ce que** les horodatages sont sauvegardés pour une période de temps prédéfinie.

9. Procédé selon l'une quelconque des revendications précédentes, **caractérisé en ce que** les données (20) échangées sont analysées quant à la communication restante.

10. Dispositif (12, 12', 12") de surveillance de systèmes de commande (10, 10', 10"), dans lequel le système de commande (10, 10', 10") présente au moins un réseau de communication (14) et au moins deux points terminaux de communication reliés au réseau de communication (14), qui échangent des données (20) par l'intermédiaire du réseau de communication, dans lequel des éléments (24, 30, 35', 35") sont prévus pour détecter les données (20) échangées entre les points terminaux de communication et des éléments (26) sont prévus pour comparer les données (20) actuellement détectées, qui sont échangées entre les points terminaux de communication, à des données (20) échangées au préalable, qui ont été échangées entre les points terminaux de communication, qui sont réalisés pour produire un message (58) lors de la détection de nouvelles données (20), dans lequel les données échangées sont déterministes en ce sens qu'aucune nouvelle donnée n'est produite par les au moins deux points terminaux de communication lors du fonctionnement normal du système de commande (10, 10', 10"), dans lequel le dispositif (12, 12', 12") est adapté pour effectuer la surveillance à l'extérieur du réseau de communication (14) existant et pour rédiger de manière passive les données (20), dans lequel le dispositif est adapté pour analyser les données (20) échangées quant à la présence de paramètres de communication (38, 40, 42, 44) contenus dans celles-ci, dans lequel les paramètres de communication (38, 40, 42, 44) comprennent au moins un paramètre issu du groupe :
- adresse matérielle (38) du point terminal de communication impliqué dans la communication,
- adresse IP (40) du point terminal de communication impliqué dans la communication,
- protocole d'application (42), avec lequel les données (20) sont échangées, et
- notification, qui est communiquée avec les données (20) échangées,
dans lequel le protocole d'application utilisé pour la communication des nouvelles données est déterminé pour définir les autres paramètres de communication, dans lequel pour analyser le protocole d'application (42) utilisé, les données (20) échangées sont examinées quant à la présence d'un modèle associé au protocole d'application (42) connu et/ou de manière heuristique, dans lequel des combinaisons destinées à définir des types de données (46) sont formées à partir des paramètres de communication (38, 40, 42, 44) analysés, dans lequel le message est produit après la détection d'un nouveau type de données.

11. Dispositif (12, 12', 12") selon la revendication 10, **caractérisé en ce que** le dispositif (12, 12', 12") est adapté pour mettre en œuvre le procédé selon l'une quelconque des revendications 1 à 8 et/ou qu'au moins un capteur (24, 35', 35") est prévu, qui est relié au réseau de communication (14) et est adapté pour détecter les données (20) échangées dans modifier lesdites données (20) échangées.

12. Dispositif (12, 12', 12") selon la revendication 11, **caractérisé en ce que** le capteur (24, 35', 35") est mis au point pour calculer des valeurs de hachage (48) au moyen d'une fonction de valeur de dispersion, dans lequel le capteur (24, 35', 35") est adapté de manière préférée pour mémoriser les valeurs de hachage (48), dans lequel la mémoire présente en particulier une structure de données indexée.

13. Dispositif (12, 12', 12") selon la revendication 11 ou 12, **caractérisé en ce que** le capteur (24, 35', 35") est mis au point pour amener au moins les nouvelles données (20) à une gestion de qualité, dans lequel le dispositif (12) est adapté pour analyser les nouvelles données (20) quant à la présence de paramètres de communication (38, 40, 42, 44) contenus dans celles-ci, dans lequel les paramètres de communication (38, 40, 42, 44) comprennent de manière préférée au moins un paramètre issu du groupe :
adresse matérielle d'un point terminal de communication,
adresse **IP** d'un point terminal de communication,
protocole d'application, avec lequel les données sont échangées, et
notification, qui est communiquée avec les données échangées.

14. Produit-programme d'ordinateur, qui est mémorisé sur un support lisible par ordinateur, comprenant des éléments de programme lisibles par l'ordinateur, qui amènent l'ordinateur à exécuter un procédé selon l'une quelconque des revendications 1 à 9 lorsque les éléments de programme sont exécutés sur l'ordinateur.
